Europäisches Patentamt

European Patent Office

Office européen des brevets

(19)

(11) **EP 1 354 323 B1**

(12) **EUROPÄISCHE PATENTSCHRIFT**

(45) Veröffentlichungstag und Bekanntmachung des
Hinweises auf die Patenterteilung:
**22.12.2004   Patentblatt 2004/52**

(51) Int Cl.⁷: **G21C 3/33**, G21C 3/356

(21) Anmeldenummer: 02712853.7

(22) Anmeldetag: **25.01.2002**

(86) Internationale Anmeldenummer:
**PCT/EP2002/000743**

(87) Internationale Veröffentlichungsnummer:
**WO 2002/059903 (01.08.2002 Gazette 2002/31)**

(54) **ABSTANDHALTER MIT MITTELN ZUR VERMEIDUNG VON REIBUNGSSCHÄDEN AN
BRENNSTÄBEN UND ENTSPRECHENDES KERNREAKTOR-BRENNELEMENT**

SPACER WITH MEANS FOR AVOIDING FRICTION DAMAGES TO FUEL RODS AND
CORRESPONDING NUCLEAR FUEL ELEMENT

GRILLE D'ESPACEMENT COMPORTANT DES MOYENS POUR EVITER LES DETERIORATIONS
PAR FROTTEMENT SUR DES CRAYONS COMBUSTIBLES ET ASSEMBLAGE COMBUSTIBLE DE
REACTEUR NUCLEAIRE CORRESPONDANT,

(84) Benannte Vertragsstaaten:
**CH DE ES FR GB LI SE**

(30) Priorität: **26.01.2001   DE 10103729**

(43) Veröffentlichungstag der Anmeldung:
**22.10.2003   Patentblatt 2003/43**

(73) Patentinhaber: **Framatome ANP GmbH
91058 Erlangen (DE)**

(72) Erfinder:
• **STABEL-WEINHEIMER, Jürgen
D-91058 Erlangen (DE)**

• **REN, Mingmin
91058 Erlangen (DE)**

(74) Vertreter: **Mörtel & Höfner
Patentanwälte
Blumenstrasse 1
90402 Nürnberg (DE)**

(56) Entgegenhaltungen:
EP-A- 0 196 598          EP-A- 0 237 064
EP-A- 0 249 107          EP-A- 0 273 183
EP-A- 0 319 725          EP-A- 0 482 384
EP-A- 0 656 631          EP-A- 0 656 632
DE-U- 29 808 966

# EP 1 354 323 B1

**Beschreibung**

Die Erfindung bezieht sich auf einen Abstandhalter für ein Brennelement eines Kernreaktors mit den Merkmalen des Oberbegriffs des Patentanspruches 1. Außerdem bezieht sich die Erfindung auf ein Brennelement mit einem solchen Abstandhalter.

Die Erfindung betrifft dabei das Vermeiden von Reibungsschäden an Brennstäben eines Kernreaktors, dessen Brennelemente mit Leichtwasser gekühlt werden, - insbesondere eines Druckwasser-Reaktors - durch Modifizieren von Mitteln, die bisher in Brennelementen eingesetzt wurden, um beim Betrieb des Reaktors die Beweglichkeit der Brennstäbe möglichst so zu begrenzen, dass im Strom des Kühlwassers die Brennstäbe an den Stellen, an denen sie in Abstandhaltern abgestützt sind, möglichst keine transversalen Verschiebungen und keine Kippbewegungen ausführen können und daher ihre Reibung an den Abstandhaltern begrenzt wird. Solche Mittel, mit denen möglichst jegliche Beweglichkeit der Brennstäbe in den Abstandhaltern unterbunden wird, ermüden jedoch (z.B. aufgrund von Strahlungsschäden) unter den Bedingungen des Reaktorbetriebes nach kurzer Zeit, und durch diese die Beweglichkeit möglichst stark begrenzenden Mittel können in aller Regel bereits im zweiten Betriebszyklus, in dem ein solches Brennelement eingesetzt wird, keine derart hohen Kräfte mehr auf die Brennstäbe ausgeübt werden, dass die Brennstäbe durch Haftreibung in den Abstandhaltern gehalten werden. Vielmehr treten dann Eigenschwingungen auf, die selbst bei geringer Energieaufnahme aus dem Kühlwasserstrom zu hohen Schwingungsamplituden und entsprechenden Reibungen führen können.

Die Anmelderin hat aber entdeckt, dass ein anderer, unerwarteter Effekt zur Vermeidung von Reibungsschäden ausgenutzt werden kann. Soweit dieser Effekt - in Kenntnis der Erfindung - auch an Brennelementen beobachtet werden kann, bei denen die auf die Brennstäbe des Brennelements ausgeübten Kräfte bereits infolge eines längeren Einsatzes (z.B. im zweiten Zyklus der Bestrahlung) bereits in einem wesentlichen Ausmaß ermüdet sind, betrifft die Erfindung also die gezielte Verwendung dieser verringerten Kräfte zur Ausnutzung des von der Anmelderin entdeckten, unerwarteten Effekts.

Die Erfindung betrifft nun die Verstärkung dieses unerwarteten Effekts, um die Reibungsschäden durch gezielte und modifizierte Verwendung von Mitteln zu vermeiden, die die relative Beweglichkeit der Brennstäbe (zumindest der in den Hüllrohren eingeschlossenen Tablettensäulen aus gesintertem Kernbrennstoff) bezüglich der Abstandhalter begrenzen. Ferner betrifft die Erfindung einen diesen Effekt ausnutzenden Betrieb des Brennelementes, ein entsprechendes Brennelement sowie insbesondere einen für dieses Brennelement geeigneten Abstandhalter.

Stand der Technik

In einem Kernreaktor, der durch Leichtwasser gekühlt wird, liegt der Brennstoff als Säulen aus gesinterten keramischen Brennstoff-Tabletten vor, die jeweils in einem gasdichten Hüllrohr aus Metall (in der Regel Zircaloy) gasdicht eingeschlossen sind. Zum Einfüllen der Tabletten in die Hüllrohre besitzen die Hüllrohre einen Innenradius, der höchstens um etwa 100 μm größer sein soll als der Radius der Tabletten, und der entstehende enge Spalt ist noch mit Inertgas (in der Regel Helium) gefüllt, um die im Brennstoff entstehende Wärme möglichst rasch ins Kühlwasser abzuleiten. Aus reaktorphysikalischen Gründen ist ein gewisses Verhältnis von Wasser (Moderator) zu Brennstoff und ein relativ geringer Abstand zwischen benachbarten Tablettensäulen einzuhalten. Dies führt zu engen räumlichen Verhältnissen im Brennelement mit nur sehr geringen Toleranzen, die auch eingehalten werden müssen, wenn das Kühlmittel mit hoher Geschwindigkeit an den Brennstäben entlang geführt wird und die Brennstäbe dadurch in seitliche Bewegungen geraten.

Daher sind eine Vielzahl solcher Brennstäbe parallel zueinander in dem geforderten geringen Abstand voneinander angeordnet und durch die Maschen von mehreren in axialem Abstand übereinander angeordneten Abstandhaltern geführt. Die Anzahl N dieser Abstandhalter, mit denen die Brennstäbe des Reaktors zu Brennelementen gebündelt werden, beträgt in der Regel N=8, und der Gehalt an spaltbarem Brennstoff ist so bemessen, dass dieses Brennelement gegenwärtig mindestens 4 Einsatzzyklen im Reaktor verbleiben kann, bevor es durch ein frisches Brennelement ersetzt werden muss, weil es so weit "abgebrannt" ist, dass die Neutronenbilanz des Brennelements negativ wird.

Die häufigste Ursache, die zu einem vorzeitigen Ersatz eines Brennelements oder wenigstens einer aufwendigen Reparatur zwingt, sind Schäden an den Hüllrohren einzelner Brennstäbe, die durch Reibung ("fretting") entstehen. Um eine Reibung der Brennstäbe an Fremdkörpern ("Fremdkörper-Fretting")zu verhindern, werden solche Fremdkörper bereits im Fuß moderner Brennelemente durch Fremdkörperfilter aus dem Kühlwasserstrom ausgefiltert. Jedoch werden insbesondere an den Stellen im Kühlwasserstrom, wo besonders starke Turbulenzen auftreten, trotzdem immer wieder Brennstäbe festgestellt, die durch Reibung der Hüllrohre an den Halteelementen in den Gittermaschen der Abstandhalter ("Eigen-Fretting") derart beschädigt sind, dass sie vorzeitig ausgetauscht werden müssen.

Derartige Reibungsschäden können nicht auftreten, wenn die Brennstäbe jeweils in den Maschen der Abstandhalter von entsprechenden Halteelementen derart festgehalten werden, dass jede Relativbewegung zwischen

2

den Brennstäben und den Halteelementen unterbunden wird. Außerdem müssen beim Transport fabrikneuer Brennelemente die Brennstäbe derart festgehalten sein, dass sie sich nicht wesentlich bewegen und nicht beschädigt werden können. Andererseits sind aber meist elastische Kräfte zum Halten der Brennstäbe vorgesehen, damit die Brennstäbe nicht bereits beim Einsetzen in die Maschen der Abstandhalter beschädigt werden.

Bei Abstandhaltern, die von aneinander befestigten, die Brennstäbe jeweils ringförmig umgebenden Hülsen gebildet werden, sind in der Regel Halteelemente mit einer "5-Punkt-Halterungt" der Brennstäbe vorgesehen, die an drei in etwa gleichen Abständen über den Umfang des Brennstabes angeordneten Stellen am Hüllrohr angreifen. An einer dieser drei Stellen sitzt eine Feder oder ein ähnliches elastisches Halteelement, das den Brennstab federnd gegen die beiden anderen Stellen drückt. An diesen beiden anderen Stellen sind jeweils ein Paar aus zwei übereinander liegenden starren Noppen angeordnet, wobei sich die oberen Noppen jeweils auf einem oberen axialen Niveau und die beiden unteren Noppen jeweils auf einem unteren axialen Niveau befinden und die beiden Niveaus etwa in gleichem axialem Abstand oberhalb und unterhalb der Auflagestelle der Feder liegen. Um den Brennstab zu kippen, muß er also an einer der beiden Niveaus mindestens von einer Noppe abgehoben werden, wobei die Feder ein Drehmoment auf den Stab ausübt, das solche Kippbewegungen dämpft, falls die Federkraft nicht ohnehin ausreicht, die Bewegung durch Haftreibung ganz zu überwinden. Bevorzugt werden häufig Abstandhalter eingesetzt, die aus einander rechtwinklig durchsetzenden Stegen gebildet und als "egg crate spacer" bezeichnet werden; auch in den dadurch entstehenden quadratischen Maschen ist eine derartige 5-Punkt-Halterung möglich, wenn die Feder diagonal in eine Ecke der Masche eingesetzt ist und die beiden Noppen-Paare jeweils in der Mitte der beiden gegenüberliegenden, aneinander angrenzenden Seitenflächen der Masche sitzen. Man kann aber auch bei einem "Egg crate spacer " eine 6-Punkt-Halterung vorsehen, wenn in der Mitte von zwei aneinander grenzenden Seitenflächen der Masche jeweils eine Feder sitzt, die den Brennstab jeweils gegen ein Noppen-Paar in der gegenüberliegenden Seite drückt.

Solange die Federkräfte also den Brennstab derart festhalten, dass die dabei auftretende Haftreibung alle am Brennstab auftretenden dynamischen Kräfte, die zu einer Relativbewegung des Brennstabs führen könnten, aufnehmen kann, sind Reibungsschäden ausgeschlossen. Allerdings relaxieren elastische Halteelemente im Lauf der Zeit allmählich und bei der Strahlenbelastung im Reaktor sogar verhältnismäßig rasch, so dass zwar in frischen Brennelementen die erwähnte Haftreibung zur Vermeidung von Reibungsschäden ausreicht, aber bereits im zweiten Einsatzzyklus des Brennelements nicht mehr alle Bewegungen des Brennstabs in den Abstandhalter-Maschen verhindern kann.

Da die Brennstäbe nicht vollkommen starr sind, können sie selbst bei einer praktisch starren Halterung in den Ebenen der Halteelemente noch vom turbulenten Kühlwasserstrom in Schwingungen versetzt werden, die in diesen Ebenen Schwingungsknoten aufweisen. Die Frequenzen dieser Eigenschwingungen ergeben sich aus den Abständen, mit denen die Halteelemente über die Länge des Brennstabs verteilt sind. Bisher sind die Abstandhalter äquidistant mit einem axialen Abstand von 40 bis 60 cm über die Länge der Brennstäbe verteilt, und da sich im Reaktor benachbarte Brennelemente an ihren Abstandhaltern abstützen, liegen die Positionen der Abstandhalter und somit die Eigenfrequenzen auch bei frischen Brennelementen fest, die ja neben die bereits vorhandenen Brennelementen eingesetzt werden. Es erscheint klar, dass die Eigenschwingungen um so weniger angeregt werden, je starrer die Halterung an den Halteelementen ist, und umso weniger brauchen sie bei entsprechend kleiner Schwingungsamplitude gedämpft zu sein.

Man hat daher bisher gehofft, dass diese Eigenschwingungen ebenso wie andere Relativbewegungen zwischen den Halteelementen und den davon gehaltenen Teilen der Brennstäbe zu keinen oder zu verringerten Reibungsschäden an den Brennstäben führen, wenn man - durch eine entsprechend hohe Federkraft und Haftreibung mittels entsprechender Auswahl von Material und Formgebung der Halteelemente - diese Relativbewegungen in den Ebenen der Abstandhalter möglichst lange unterdrückt, bzw. wie dies bei der aus der DE 298 08 966 U1 bekannten Gestaltung der Anlageelemente eines Abstandhalters der Fall ist, verstärkt dämpft. Erst anschließend, wenn die Federkraft der Halteelemente relaxiert, befürchtet man Eigen-Fretting.

Die Abstandhalter können nicht nur zur Halterung der Brennstäbe benutzt werden, sondern auch zum Erzeugen anderer Effekte, die für den Einsatz im Reaktor wünschenswert sind. So besitzt z.B. in Druckwasserreaktoren das Wasser, das in unmittelbarem Kontakt mit der heißen Brennstab-Oberfläche steht, eine höhere Temperatur als das Wasser, das sich in größerem Abstand von den Brennstäben befindet. Die Abstandhalter werden daher auch als Träger für Elemente benutzt, die durch Umlenkung des Kühlmittelstroms transversale Geschwindigkeitskomponenten und/ oder Turbulenzen im Kühlmittelstrom erzeugen und zu einer Vermischung des Wassers und einer Vergleichmäßigung der Temperatur führen. Daher sind seit langem Abstandhalter üblich, die an der dem Kühlwasserstrom abgewandten Oberkante der Abstandhalter-Stege Strömungsleitfahnen zum Umlenkung der Strömung tragen und dadurch zu Turbulenzen führen. Es ist bisher nicht im Detail untersucht, aber wohl unvermeidlich, dass solche Turbulenzen die Brennstäbe zu verstärkten Bewegungen anregen.

In den US 4,756,878-A, US 4,726,926-A und US 4,849,161-A ist ein Abstandhalter vorgeschlagen, der geringere Turbulenzen erzeugt, aber bezüglich der Durchmischung und ähnlicher thermohydraulischer Eigenschaften vorteilhaft ist. Dabei sind jeweils benachbarte Maschen des Abstandhaltergitters durch Doppelstege voneinander getrennt, wobei die beiden Einzelwände des Doppelstegs flächig aneinander liegen, sich die Doppelstege aber nach Art des "Egg crate spacer" rechtwinklig durchsetzten. Die beiden Einzelwände einer Doppelwand liegen aber nicht im ganzen Bereich zwischen zwei Maschenecken flächig aneinander, sondern sind in der Mitte derartig trapezförmig oder elliptisch voneinander weg gewölbt, dass ein von unten nach oben verlaufender Zwischenkanal entsteht, wobei das obere Ende dieses Zwischenkanals in der Ebene des Doppelstegs derart gebogen ist, dass das diesen Zwischenkanal verlassende Kühlmittel eine seitliche Ablenkung erfährt. Diese schonende Ablenkung vermeidet möglicherweise die Ausbildung größerer Turbulenzen und entsprechend angeregter Brennstabbewegungen. Außerdem ist meist in den aneinander liegenden Teilen zweier Einzelwände ein Fenster vorgesehen, das die zwei durch den entsprechenden Doppelsteg getrennten Maschen des Abstandhalters verbindet und einen Druckausgleich erzwingt, der möglicherweise ebenfalls der Ausbildung von größeren Turbulenzen und Brennstabbewegungen entgegenwirkt.

Im geradlinigen Teil des Zwischenkanals trägt jede Einzelwand noch eine bogenförmige Wölbung um eine zu den Brennstäben senkrechte Achse, um eine Auflagefläche für den Brennstab zu bilden. Diese bogenförmige Wölbung ist außerdem durch einen Längsschlitz geteilt, so dass zwei federnde Halteelemente an dieser Seitenwand des Strömungskanals entstehen. Man spricht von einer 8-Punkt-Halterung, denn in einer Masche entstehen dabei acht "Halle-Punkte", obwohl es sich dabei um acht langgestreckte Auflageflächen handelt, deren axiale Ausdehnung von der Form der Wölbung abhängig ist. Aus der bisher vorgesehenen Geometrie der Wölbung kann geschlossen werden, dass beim Einsetzen eines Brennstabs in eine Masche des fabrikfrischen (also unbestrahlten) Abstandhalters die acht von den Wölbungen gebildeten, bogenförmigen Halteelemente auf einer Länge von etwa 3 cm flachgedrückt werden und mindestens mit der Hälfte dieser Länge (also mindestens 15 mm) am Brennstab anliegen. Alle acht Auflageflächen liegen dabei auf dem gleichen axialen Niveau; letztlich wird durch diese Halteelemente also nur ein Abschnitt von etwa 5 mm des Brennstabes in der Masche federnd gehalten.

Derartige Abstandhalter sind wegen ihrer komplizierten Geometrie sehr aufwendig und teuer; sie sind von ihren Erfindern und dem Hersteller, der gleichzeitig der Anmelder des vorliegenden Patents ist, für Reaktoren mit besonders hoher Betriebstemperatur bestimmt und zeigen dort ein vorteilhaftes Verhalten, weshalb sie "High temperature performance" - Abstandhalter ("HTP") genannt werden. Sie zeigen auch eine hohe Resistenz gegen Fretting - selbst an besonders Fretting-gefährdeten Abstandhalter-Positionen in den Brennelementen und Druckwasser-Reaktoren.

Solche besonders gefährdeten Positionen sind bekannt und liegen z.B. überall vor, wo der Kühlwasserstrom stärker abgelenkt wird. Ein Beispiel ist der unterste Abstandhalter eines Brennelementes, wo der Kühlwasserstrom aus dem Fuß des Brennelementes heraustritt und beim Eintritt in die Zwischenräume zwischen den Brennstäben auf die Enden dieser Brennstäbe trifft. Gerade diese Enden besitzen jedoch eine Beweglichkeit und müssen durch einen Abstandhalter vor gegenseitigen Kollisionen geschützt werden. Dieser Abstandhalter ist daher stärker gefährdet und im Stand der Technik besonders stabil ausgebildet. (z.B. aus Inconel, das eine hohe Materialfestigkeit und Strahlungsbeständigkeit besitzt). An solchen Stellen wurde es in der Praxis bereits erforderlich, einen'Abstandhalter mit 5-Punktoder 6-Punkt-Halterung mehrfach auszutauschen, da stets nach kurzer Einsatzzeit Fretting beobachtet wurde. Dagegen wachsen bei Brennelementen mit HTP-Abstandhaltern, die bereits zwei Jahre eingesetzt waren - sich also in dem Zeitabschnitt ihres Einsatzes befinden, in dem die Haltekräfte anderer Abstandhalter bereits auf niedrige Werte ermüdet sind - die Marken, die auf den Brennstäben durch Reibung entstehen, selbst an solchen gefährdeten Stellen kaum mehr.

Beim Vergleich des HTP-Abstandhalters mit den anderen Abstandhaltern nach dem Stand der Technik, die ebenfalls elastische Federkräfte verwenden, liegt die Vermutung nahe, dass die deutlich verbesserte Frettingresistenz auf die vermehrte Anzahl und die größere Ausdehnung der' Halteelemente zurückzuführen ist, wodurch eine bessere Ausnutzung und Charakteristik der Federkräfte und eventuell auch eine langsamere Ermüdung (insgesamt also eine Annäherung an den "Idealfall" einer starren Halterung) erreichbar wäre. Unter dieser Annahme wäre es dann auch günstiger, für eine weitere Verbesserung des HTP-Abstandhalters von dem bisher verwendeten Zircaloy, das strahlungsbedingten Materialänderungen unterliegt, auf das beständigere Inconel überzugehen, das im Stand der Technik häufig für federnde Elemente oder die gesammten Abstandhalter verwendet wird. Dann könnte es auch möglich werden, auf die komplizierte Geometrie mit gebogenen Zwischenkanälen und andere Details zu verzichten, die für den hohen Aufwand des HTP-Abstandhalters verantwortlich sind.

Die Kenntnis der für die Frettingresistenz wichtigen Mechanismen und Details ist also wünschenswert, um sie bei der Entwicklung billigerer, besserer oder aus anderen Gründen veränderter Abstandhalter übertragen und/oder weiterentwickeln zu können. Im Hinblick auf die geschilderten Umstände könnte Ziel einer solchen Übertragung oder Weiterentwicklung sein, möglichst viele langgestreckte Halteelemente zu verwenden, die sich über einen möglichst langen axialen Abschnitt des Brennstabs erstrecken.

Jedoch liegen keine gesicherten Erkenntnisse vor, welche der verschiedenen Merkmale, die bei dem erwähnten HTP-Abstandhalter aus Gründen der High Temperature Performance kombiniert wurden, das Reibungsverhalten entsprechender Brennelemente verbessern und ob die angegebene Vergrößerung von Zahl und Länge der Auflagepunkte sich positiv oder negativ (oder überhaupt nicht) auf das Reibungsverhalten auswirkt.

Aufgabe der Erfindung

Der Erfindung liegt die Aufgabe zugrunde, einen Abstandhalter für ein Brennelement anzugeben, bei dem die erwähnten Schäden, die durch Reibung der Halteelemente des Abstandhalters an den Brennstäben entstehen können, möglichst zuverlässig vermieden sind.

Die Erfindung setzt dabei ein besseres Verständnis der für Reibungsschäden verantwortlichen Vorgänge voraus, denn nur dieses Verständnis ermöglicht, bei Weiterentwicklungen die Eigenschaften auszuwählen, die für Reibungsschäden entscheidend sind, und einen Abstandhalter (allgemeiner: ein Brennelement) zu schaffen, der das gleiche oder sogar ein besseres Fretting-Verhalten wie der HTP-Abstandhalter aufweist, aber in anderen Merkmalen, die bezüglich des Fretting-Verhaltens unwichtig sind, von diesem Stand der Technik abweicht. Es geht also insbesondere um die gezielte Auswahl, Übertragung und ggf. Verbesserung von bestimmten Merkmalen des HTP-Abstandhalters auf andere Ausführungen.

Entdeckung

In den im folgenden noch genauer beschriebenen Versuchen wurde von einem üblichen 5-Punkt-Abstandhalter ausgegangen, in dessen Maschen in einem ersten Versuch ein Brennstab eingesetzt wurde, bei dem der Durchmesser der Tablettensäule gegenüber dem Innendurchmesser des. Hüllrohrs derart verringert war, dass die Tabletten sich bei einer Vibration des Brennstabs gegeneinander verschieben und aneinander reiben können. Diese Verschiebung wurde im ersten Versuch aber dadurch verhindert, dass ein Draht in den Zwischenraum zwischen Tablettensäule und Hüllrohr eingeklemmt wurde. Die relative Lage der Brennstofftabletten zum Hüllrohr war also fixiert, und die relative Lage des Hüllrohres zum Abstandhalter war ebenfalls durch die am Hüllrohr angreifenden, elastischen Federkräfte mehr oder weniger fixiert. In einem zweiten Versuch wurde dieser Draht weggelassen (es war also nur noch die Relativlage des Hüllrohrs zum Abstandhalter fixiert)und in einem dritten Versuch wurde ein Brennstab mit ebenfalls fixierter Relativlage der Tabletten, jedoch einem Außendurchmesser verwendet, der etwa 0,05 mm geringer war als der Durchmesser der den Brennstab aufnehmenden Öffnung, die im Abstandhalter durch die Halteelemente definiert wird (die Federkräfte griffen also am Hüllrohr nur noch bei starken Ausschlägen des Brennstabs an). In allen drei Fällen wurde diese Brennstab/Abstandhalter-Anordnung in einem Test-Kanal einem Wasserstrom ausgesetzt, dessen Turbulenzen die Anordnung in Schwingungen versetzte.

Im ersten Versuch wurden starke Reibungsschäden am Brennstab beobachtet, die den Reibungsschäden glichen, die auch bei Brennstäben beobachtet sind, die im Lauf eines realen Einsatzes im Reaktor unbrauchbar geworden waren.

Überraschenderweise stellte die Anmelderin jedoch fest, dass in den beiden anderen Versuchen praktisch kein Abrieb durch Fretting entstanden ist.

Der erste Versuch simuliert praktisch die Bedingungen in einem Brennelement, das am Beginn seiner Einsatzzeit ("begin of life", BOL) steht. Offensichtlich reicht eine hohe Federkraft mit einer entsprechend hohen Haftreibung nicht aus, um Fretting-Schäden zu vermeiden. Eine genauere Analyse der Bewegungen des Brennelements und der Brennstäbe zeigt, dass die Federkraft zwar ausreicht, um stochastische Bewegungen, die durch die turbulente Anregung entstehen, zu beherrschen, jedoch Eigenschwingungen ("selbstinduzierte" Vibrationen) in Form von Biegeschwingungen auftreten, bei denen die Brennstäbe Kippbewegungen in ihren Halteelementen ausführen. Diese Biegeschwingungen sind umso schwächer gedämpft, je starrer die Brennstäbe in den Maschen gehalten werden. Zwar führt die starrere Halterung auch dazu, dass eine ausgeübte Kraft den Brennstab auch nur geringfügig aus seiner Ruhelage ablenkt (bei den Biegeschwingungen also lokal auch nur um einen geringen Winkel $\varphi$ kippt); jedoch können sich bei periodischer Kraft die Amplituden erheblich aufschaukeln und die Halteelemente daher zu einem entsprechend starken Fretting führen.

Beim zweiten Versuch bewegen sich die Brennstofftabletten gegeneinander und durch entsprechende innere Reibung in der Tablettensäule wird kinetische Energie vernichtet. Zur Haftreibung tritt also noch eine erhöhte Dämpfung der Biegeschwingungen auf, die sich aufgrund dieser Dämpfung auch nur.zu geringen Amplituden aufschaukeln können. Entsprechend sind die Kippbewegungen und das entsprechende Fretting wesentlich schwächer.

Beim dritten Versuch üben die Halteelemente - über eine Schwingungsperiode gemittelt - eine geringere Kraft auf die Brennstäbe aus, die etwa dem Zustand des Brennelements am Ende seiner Einsatzzeit ("end of life", EOL) entspricht. Während man früher glauben konnte, das Brennelement würde immer empfindlicher gegen Frettingschäden, je länger es bereits eingesetzt ist und je schwächer daher die Federkraft seiner Halteelemente wird, zeigt sich, dass das Brennelement beim Erlahmen der Haltelemente immer unempfindlicher gegenüber Fretting wird. Die Analyse. der Schwingungszustände zeigt, dass beim dritten Versuch die "selbstinduzierten Schwingungen" im gleichen Maße wie beim zweiten Versuch gedämpft sind und daher nur entsprechend niedrige Amplituden der Kippbewegungen auftreten.

Zur Vermeidung von Fretting-Schäden sollte also bereits der BOL-Zustand möglichst dem EOL-Zustand bisheriger Brennelemente entsprechen.

Es ergibt sich also, dass hohe Federkräfte und eine entsprechend hohe Haftreibung zur Anregung ungedämpfter Eigenschwingungen mit Fretting-fördernden Kippbewegungen führen, also schädlich sind, während eine erhöhte Dämpfung aus einer solchen Eigenschwingung, falls sie durch die Strömungsturbulenzen angeregt wird, Energie entzieht, daher die Amplituden der Kippbewegungen begrenzt und das Fretting verhindert.

Die Anmelderin hat also entdeckt, dass bei den vom Wasserstrom angeregten Schwingungen des Brennelements Biegeschwingungen entscheidend sind, deren Anregung und Amplitude zunimmt, je steifer die Brennstäbe und ihre Halterung in den Brennelementen sind, weil diese Steifheit mit einer Abnahme der Dämpfung verbunden ist. Eine steife Halterung fördert also Fretting und ist schädlich. Daher muß im Vergleich zum Stand der Technik die Beweglichkeit durch geeignete Mittel erhöht werden.

Der Leser erkennt, dass diese Entdeckung und die daraus folgenden Mittel zur Erhöhung der Dämpfung nicht Stand der Technik sind und vom Stand der Technik nicht Gebrauch machen.

Zusammenfassung der Erfindung

Die Erfindung betrifft also den Einsatz von Brennelementen in einem mit Leichtwasser gekühltem Reaktor, wobei zumindest Abschnitte der Brennstäbe des Brennelements vom Kühlmittelstrom in transversale Bewegungen versetzt werden und die Brennstäbe durch Maschen von mehreren übereinander in axialem Abstand angeordneten Abstandhaltern geführt werden, die transversalen Bewegungen aber durch Halteelemente in diesen Zellen begrenzt werden. Jedoch besitzen die Halteelemente spätestens im zweiten Einsatzzyklus des Brennelements nicht mehr die ausreichende Federkraft, um durch Eigenschwingungen des Brennelements hervorgerufene Relativbewegungen zwischen den Halteelementen und den Brennstäben durch Haftreibung zu unterdrücken.

Wie noch experimentell gezeigt wird, regt der Kühlwasserstrom im Brennelement und in den Brennstäben praktisch nur Schwingungen an, die als selbstinduzierte Eigenschwingungen bezeichnet werden und Lösungen der Eigenschwingung-Gleichung

$$\frac{d^2x}{dt^2} + D \cdot w \cdot \frac{dx}{dt} + w^2 x = 0$$

darstellen, wobei D die Dämpfung bezeichnet und in Prozent ausgedrückt werden kann, während x die transversale Auslenkung und ω die Frequenz bezeichnet. Dabei handelt es sich bei diesen Schwingungen um Eigenschwingungen mit den Biegeschwingungs-Moden bis zur Ordnung N, wobei N die Anzahl der im Brennelement benutzten Abstandhalter ist und diese Eigenschwingungen des Brennelements in Phase mit den entsprechenden Eigenschwingungen des Brennstabs sind. Wie ferner noch gezeigt wird, sind vor allem die Ordnungen (N-2) und (N-3) für Fretting verantwortlich. Für die Ordnung (N-2) liegt die Dämpfung einer Schwingung der Amplitude 50 μm in einem Brennelement mit üblicher 5-Punkt-Halterung der Brennstäbe (in Luft) unter 0,35 %; die Erfindung lehrt aber, diese Ordnung stärker zudämpfen. Die niedrigeren Ordnungen sind für das Fretting-Verhalten weniger wichtig, da sie von Natur aus wesentlich stärker gedämpft sind und daher entsprechende Eigenschwingungen nur mit wesentlich geringerer Amplitude angeregt werden können, wie noch gezeigt werden wird. Außerdem ist die erhöhte Dämpfung des Modes (N-2) ebenfalls mit einer erhöhten Dämpfung der niedrigeren Modes verbunden, so dass es genügt, sich auf den Mode (N-2) zu konzentrieren.

Unter "erhöhter Dämpfung" wird dabei eine Dämpfung verstanden, die über dem mit üblicher 5-Punkt-Halterung erzeugbaren Wert liegt.

Die vorstehend genannte Aufgabe wird gemäß der Erfindung gelöst mit einem Abstandhalter mit den Merkmalen des Patentanspruches 1. Gemäß diesen Merkmalen sind im Abstandhalter Halteelemente vorgesehen, die bei einem Kippwinkel φ = 0,1° des Brennstabs höchstens ein Drehmoment M = 10 N · mm auf den Brennstab ausüben. Dies bewirkt eine erhöhte Dämpfung und Reibungsschäden werden vermieden.

Bevorzugt sind bei wenigstens einem Abstandhalter (insbesondere dem untersten Abstandhalter in einem Druckwasser-Brennelement) in den meisten Maschen, die einen Brennstab aufnehmen (insbesondere in allen Maschen mit Brennstäben), die Halteelemente derart ausgebildet. Diese Möglichkeit ist ebenfalls bereits näher erläutert. Dies gilt natürlich nicht für Maschen, die nicht von Brennstäben durchsetzt sind, wie z.B. die Maschen mit Steuerstab-Führungsrohren im Druckwasser-Reaktor.

Vorzugsweise sind die Halteelemente derart ausgebildet, dass sie nach Einsetzen des betreffenden Brennstabs an diesem Brennstab mit mehreren langgestreckten Auflageflächen anliegen, deren Längsausdehnung jeweils mindestens 1 mm beträgt. Der höchste Auflagepunkt des Brennstabes in dieser Masche liegt dabei höchstens 10 mm (vorzugsweise höchstens 5 mm, insbesondere höchstens 3 mm) über dem niedrigsten Auflagepunkt des Brennstabes in der gleichen Masche; mit anderen Worten: Betrachtet man die Halteelemente als Teil des Abstandhalters, so definiert der höchste und der niedrigste Berührungspunkt zwischen Brennstab und Abstandhalter einen axialen Abschnitt auf dem Brennstab, der vom Abstandhalter gehalten ist, und maximal die angegebene Länge besitzt. Entsprechend dieser Ausführung wird also der Brennstab nur auf einem verhältnismäßig kurzen Teilstück (axiale Länge höchstens 10 mm oder weniger) von den Halteelementen gehalten, deren Federkraft daher in allen realistischen Fällen nicht ausreicht, um relative Kippbewegungen der Brennstäbe von 0,1° zu verhindern. Jedoch dämpft diese Kraft wirkungsvoll solche Kippschwingungen. Je größer aber die axiale Länge des von den Halteelementen gehaltenen Teilstücks des Brennstabes gewählt wird (d.h. je steifer die Halterung des Stabes in den Halteelementen wird), umso größer wird zwar die für eine einmalige Auslenkung erforderliche Kraft, jedoch wird die Dämpfung der Biegeschwingungen geringer und daher nimmt deren Amplitude zu.

Halteelemente, die ein derart kurzes Teilstück des Brennstabs halten, sind zwar in der Lage, auch nach betriebsbedingter Relaxation der Federkräfte die stochastisch auftretenden translatorischen Relativbewegungen dieser Teilstücke aufzunehmen und praktisch zu unterbinden, jedoch können sie relative Kippbewegungen dieser Teilstücke selbst im unbestrahlten Zustand nicht auffangen, sondern ermöglichen noch Mikrobewegungen. Sind diese Mikrobewegungen durch Biegeschwingungen angeregt, so erzeugen sie eine Reibung, die zu keinen Reibungsschäden führen, aber auf diese Schwingungen dämpfend wirken.

Bei allen Ausführungsformen ist es vorteilhaft, wenn über und unter einem an einem Brennstab anliegenden federnden Halteelement einer Masche jeweils ein starres Sicherheitselement vorgesehen ist, das einen Abstand zwischen 0,1 und 0,5 mm (vorteilhaft etwa 0,3 mm oder weniger) vom entsprechenden Brennstab im Ruhezustand hat. Dadurch wird eine maximale Auslenkung des Brennstabes vorgegeben und sichergestellt, dass zwischen den Wänden des Abstandhalters und dem Brennstab (und auch zwischen zwei benachbarten Brennstäben)ein minimaler Abstand, wie er aus verschiedenen Gründen häufig gefordert wird, nicht unterschritten werden kann.

Die oben angegebene Entdeckung soll insbesondere zu einer Weiterentwicklung des HTP-Abstandshalters führen, also zu Gegenständen, die sich von diesem bereits bekannten Abstandhalter unterscheiden. Dabei lehrt die Erfindung durch die Angabe der vorteilhaften Ausdehnung der Auflageflächen, dass federnde Halteelemente durch einen Brennstab weder zu stark deformiert werden dürfen, wodurch eine zu große Auflagefläche in axialer Richtung) entstünde, noch zu kleinflächigen Kontakt habe dürfen. Diese Angaben werden möglicherweise erfüllt, wenn die Halteelemente im Lauf der Bestrahlung ermüden, werden jedoch vorteilhaft bereits bei der Auslegung und Fertigung der unbestrahlten Abstandhalter berücksichtigt. Insbesondere ist auch an Abstandhalter mit den in den Ansprüchen angegebenen Merkmalen und mit Maschen gedacht, die weniger als acht Auflageflächen besitzen. Es sind aber auch Abstandhalter (und entsprechend ausgestattete Brennelemente) denkbar, bei denen auf das eine oder andere Merkmal, das im Zusammenhang mit dem HTP-Abstandhalter geschildert oder in den Zeichnungen 19 bis 21 gezeigt ist, verzichtet ist. Dies eröffnet die Möglichkeit zu vereinfachten oder verbesserten Konstruktionen.

Bevorzugt sind zumindest die für die inneren Brennstäbe vorgesehenen Maschen gleich ausgebildet. Bei Abstandhaltern mit quadratischen Maschen tragen vorteilhaft die vier Maschenwände jeweils Halteelemente. Vorteilhaft sind alle Halteelemente als elastische Federn ausgebildet. In hexagonalen Maschen sind die Halteelemente oder Paare von Halteelementen derart angeordnet, dass sie mit etwa gleichem Umfangswinkel längs des Umfangs der Brennstäbe verteilt sind, wobei mindestens drei Maschenwände Halteelemente tragen. Vorteilhaft sind alle Maschenwände, die Halteelemente für Innenstäbe tragen, gleich ausgebildet.

Bisher sind nur elastische, langgestreckte Halteelemente untersucht und erfolgreich getestet, die parallel zu den Brennstäben orientiert sind. Gemäß der Erfindung muß die Ausdehnung in axialer Richtung begrenzt sein, um eine rasche Anregung zu vermeiden. Falls die Dämpfung auch maßgeblich von Mikrobewegungen zwischen in den Auflageflächen abhängt, kann es auch vorteilhaft sein, die langgestreckten Auflageflächen senkrecht zu den Brennstäben auszurichten, da dann selbst bei erwünscht kleiner axialer Ausdehnung die Länge der Auflagefläche im Hinblick auf die Dämpfung vergrößert werden kann

### Kurzbeschreibung der Figuren

Anhand von mehreren Zeichnungen werden die Erfindung und bevorzugte Ausführungsbeispiele näher erläutert.

Es zeigen:

| Figur 1: | eine Aufsicht auf ein Druckwasser-Brennelement |
| Figur 2 und 3: | Aufsicht und Längsschnitt (entlang der Linie III-III in Fig.2) durch eine Masche eines erfindungsgemäßen Abstandhalters; |
| Figur 4: | einen entsprechenden Längsschnitt bei einem herkömmlichen 5-Punkt-Abstandhalter; |
| Figur 5 und 6: | die Abhängigkeit der Schwingungsspektren eines herkömmlichen Brennelements im BOL- und EOL-Zustand von der Strömungsgeschwindigkeit des Kühlwassers; |
| Figur 7 und 8: | Schwingungsspektren eines Brennelements ohne und mit innerer Reibung und entsprechender |

| | |
|---|---|
| | Dämpfung der Brennstäbe; |
| Figur 9: | schematisch den Ruhezustand, einen unmöglichen und einen möglichen Schwingungszustand des Brennelements; |
| Figur 10: | die Verschiebung des Brennstabs gegenüber seiner Ruhelage als Funktion des Ortes auf dem Brennstab bei einer schwingungsbedingten Auslenkung; |
| Figur 11 und 12: | die Kippwinkel des Brennstabs als Funktion des Ortes für Moden der Ordnung 1 und (N-2). |
| Figur 13: | die Positionen von Brennstab und federndem Halteelement bei Kippschwingungen in üblichen Abstandhaltern; |
| Figur 14: | das für einen Kippwinkel φ eines Brennstabs erforderliche Drehmoment M bei einem Abstandhalter der Fig. 13; |
| Figur 15 und 16: | den Figuren 13 und 14 entsprechende schematische Darstellungen bei der Erfindung; |
| Figur 17 und 18: | die Dämpfung für die Modes (N-3) und (N-2) bei konventioneller Lagerung und gemäß der Erfindung. |
| Figur 19: | einen HTP-Abstandhalter mit Führungsrohr und einen Brennstab. |
| Figur 20: | die Doppelstege dieses Abstandhalters vor dem Zusammenbau |
| Figur 21: | die Wirkung des Zwischenkanals auf die Brennstäbe dieses Abstandhalters |
| Figur 22 und 23: | ein weiteres Ausführungsbeispiel eines Abstandhalters nach der Erfindung. |

Erläuterungen der Erfindung und Ausführungspeispiele

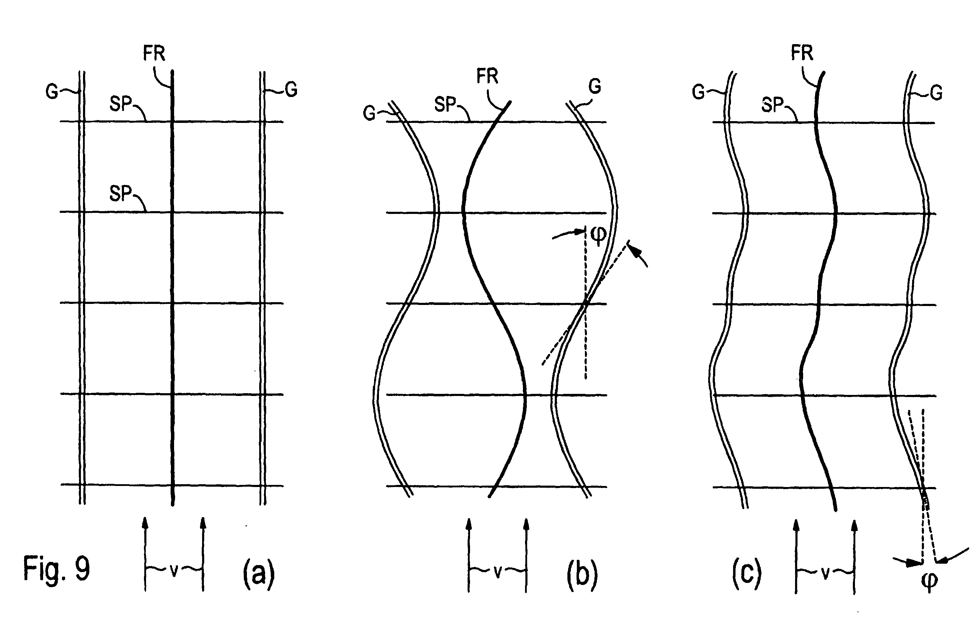

Der Leser erkennt, dass die Erfindung von einem üblichen Betrieb eines Kernreaktors ausgeht, dessen Brennelemente mit Leichtwasser gekühlt werden. Die Brennstäbe eines solchen Brennelementes enthalten zu Säulen aufgeschichtete Tabletten aus gesintertem Kernbrennstoff, die in Hüllrohren eingeschlossen sind. Da solche Brennelemente mehrere Abstandhalter für die Brennstäbe besitzen, wird jeder Abstandhalter von Abschnitten der Tablettensäulen durchsetzt, wobei die Abstandhalter und Hüllrohre als ein Mittel dienen, um die Beweglichkeit dieser Abschnitte (und damit auch die gesammte Beweglichkeit der Tablettensäulen)zu begrenzen - zumindest relativ zu den Abstandhaltern. Dadurch sind Bewegungen, die ähnlich dem Zustand b der (später genauer erläuterten) Figur 9 sind, weitgehend unmöglich bzw. können nur mit äußerst geringer Amplitude und starker Dämpfung auftreten. Überwiegend treten jedoch noch Biegeschwingungen auf, die dem Zustand c der Figur 9 entsprechen.

Die Unterdrückung des Zustands b ist erforderlich und umso wirksamer, je stärker die Mittel wirken, die durch Beschränken dieser relativen Beweglichkeit die Bewegungen dämpfen. Bisher ging man davon aus, dass möglichst stark beschränkende Mittel auch den Zustand c entsprechend stark dämpfen. Der bereits erwähnte erste Versuch zeigt jedoch das Gegenteil. Die Erfindung sieht daher vor, diese Mittel so auszulegen, daß sie zumindest für die erwähnten Abschnitte einiger Brennstäbe in wenigstens einem Abstandhalter die Beweglichkeit - verglichen mit den beschränkenden Mitteln im vergleichbaren Stand der Technik - erhöhen. Bei den entsprechenden Bewegungen wird dann auch dem erwähnte Zustand c der Figur 9 Energie entzogen und diese Biegeschwingung verstärkt gedämpft. Dabei führt bereits eine geringe Erhöhung der Dämpfung zu einer Reduzierung des Abriebs an den Hüllrohren in einem Ausmaß, das vollkommen unerwartet ist.

Da die in Siedewasserreaktoren beobachteten Reibungsschäden bisher praktisch ausschließlich auf das eingangs erwähnte Fremdkörper-Fretting zurückgehen, aber in Druckwasserreaktoren für die meisten der (allerdings äußerst seltenen) Beschädigungen die Ursache in der direkten Reibung zwischen Brennstab und Halteelementen liegt, ist die Erfindung in erster Linie für Brennelemente in Druckwasserreaktoren bestimmt und wird für diese beschrieben.

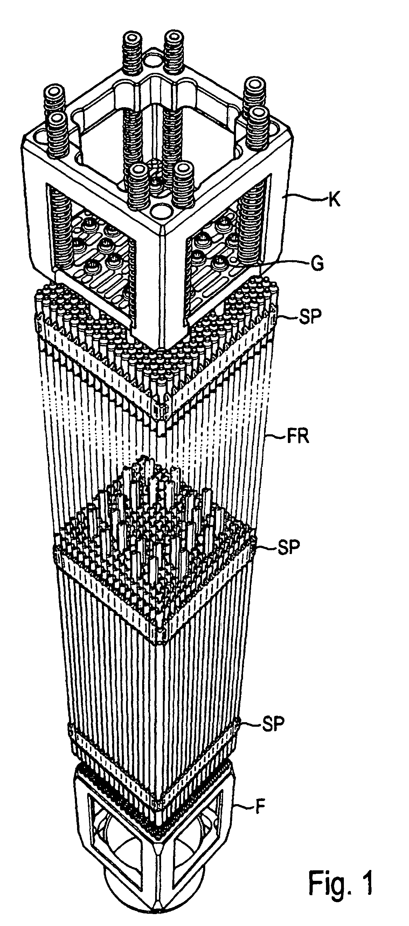

Ein derartiges Druckwasser-Brennelement (Figur 1) besitzt einen Kopf K und einen Fuß F, die durch Steuerstab-Führungsrohre G miteinander verbunden sind. An diesen Führungsrohren sind mehrere (in der Regel 8 bis 9) Abstandhalter SP befestigt, die z.B. aus aneinander geschweißten Hülsen bestehen können, im dargestellten Fall aber als Gitter aus einander rechtwinklig kreuzenden Stegen ausgebildet sind. In den dadurch entstehenden, kreisrunden oder rechteckigen Maschen sind die Führungsrohre G und die Brennstäbe FR eingesetzt.

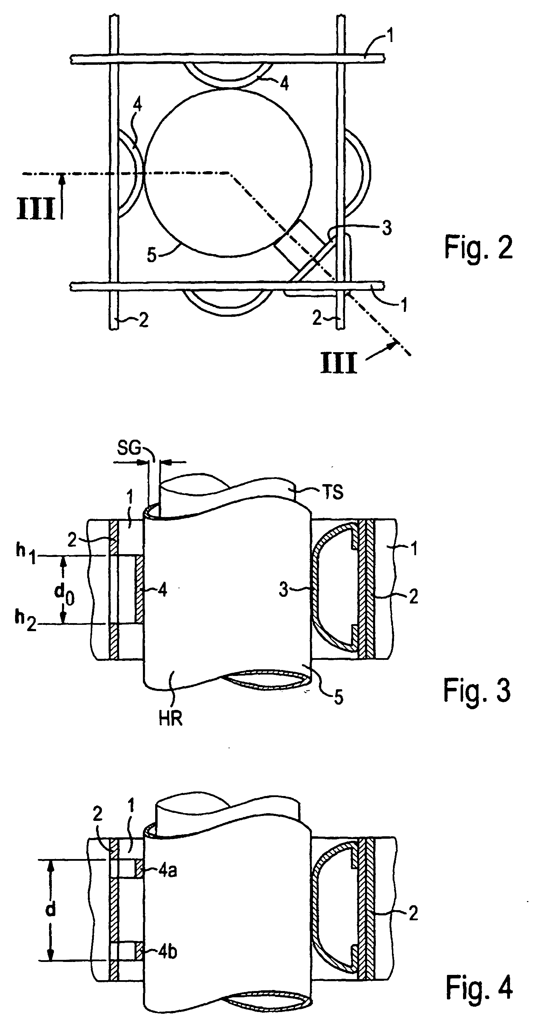

In der Aufsicht auf eine Masche eines "Egg crate"-Abstandhalters (Fig.2) erkennt man die sich kreuzenden Stege 1 und 2 aus Zircaloy, die in diesem Fall ein Ecke mit Fenstern bilden, in die eine Feder 3 aus Inconel eingesetzt ist. Die in der gegenüberliegenden Ecke aneinander stoßenden Wände der Masche weisen jeweils eine in die gleiche Masche gerichtete Wölbung auf, die in Fig.3 genauer erkennbar ist und eine Noppe, also ein praktisch starres Halteelemente 4, bildet, gegen das der Brennstab 5 von den federnden Halteelement 3 gedrückt wird. Wie in Fig.3 gezeigt, befinden sich die federnden und starren Halteelemente 3,4 auf einem gemeinsamen Niveau, wobei der höchste Punkt h1, an dem der Brennstab 5 an einem der Halteelemente 3,4 aufliegt, von dem tiefsten Auflagepunkt $h_2$ einen axialen Abstand d0 hat der in diesem Fall 3mm beträgt. Bei dieser Ausbildung der Halteelemente sind die Auflageflächen zwischen dem Brennstab 5 und dem Halteelementen 3,4 nahezu linienförmig und parallel zur Achse des Brennstabs gerichtet. Die Federkraft des federnden Halteelements 3 beträgt üblicherweise mehr als 5 N.

Abweichend hiervon ist es auch vorteilhaft, die Wölbungen 4 ebenfalls als federnde Halteelemente auszubilden.

Fig. 3 zeigt auch, dass zwischen dem Hüllrohr HR und der darin eingeschlossenen Tablettensäule TS im fabrikfrischen Zustand ein Spalt SG entsteht. Falls ein Brennelement neu entworfen und auf die Physik des Reaktors abgestimmt wird, kann es vorteilhaft sein, eine Spaltbreite von etwa 150 µ vorzusehen. Im vorliegenden Versuch ist der Spalt durch einen verringerten Tablettendurchmesser bestimmt, da für einen späteren Versuch Hüllrohre mit geringeren inneren und äußeren Durchmesser vorgesehen sind. Beim ersten Versuch ist in den relativ großen Spalt aber ein Draht geklemmt, der die Tablettensäule TS innerhalb des Hüllrohrs fixiert.

Im Gegensatz zum beschriebenen Abstandhalter zeigt Fig.4 den Längsschnitt durch eine herkömmliche 5-Punkt-Halterung, bei der der Brennstab nunmehr von einem federnden Halteelement gegen jeweils ein Paar übereinander liegender Noppen 4a, 4b in den anderen Maschenwänden gedrückt wird. Dem Abstand d0 in Fig.3 entspricht bei dieser Halterung der Abstand d, der üblicherweise mindestens etwa 30 mm beträgt.

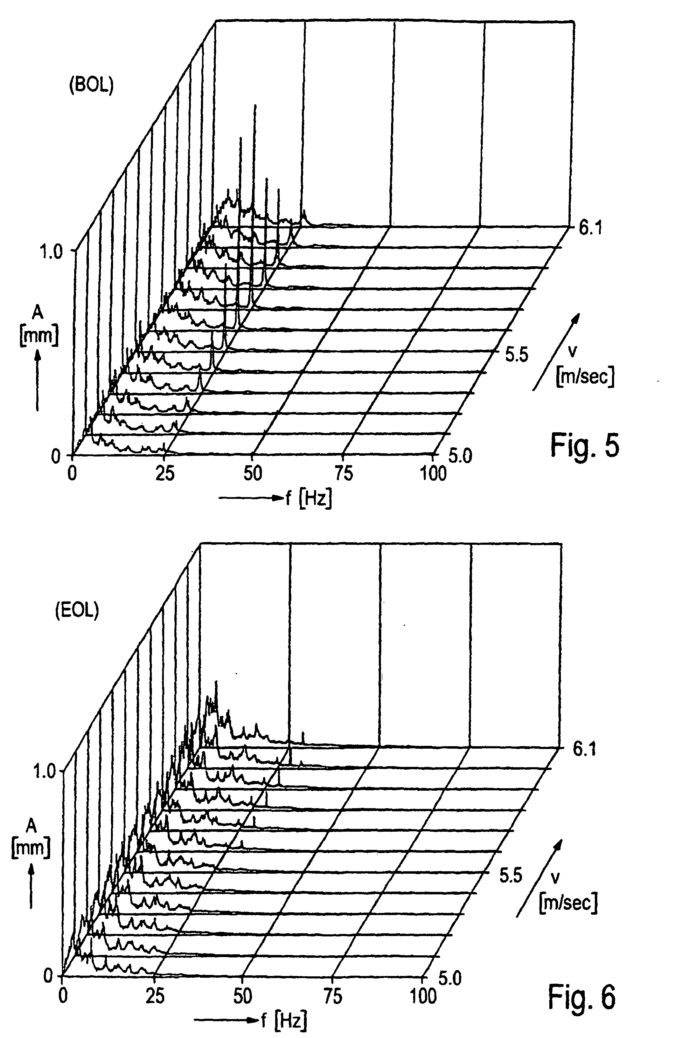

Ein Brennelemente mit Abstandhaltern, die eine 5-Punkt-Halterung gemäß Fig. 4 darstellen, wird im unbestrahlten Zustand (BOL-Zustand) einem Kühlwasserstrom mit der veränderlichen Strömungsgeschwindigkeit v ausgesetzt, wobei Fig.5 die Amplitude A der Bewegungen des Brennelements zeigt, gemessen an den Führungsröhren in der Mitte zwischen zwei Abstandhaltern. Man erkennt, dass im Bereich einer Strömungsgeschwindigkeit v zwischen etwa 5,5 und 6,0 m/s im Brennelement besonders starke Schwingungen mit der Frequenz von etwa 25 Hertz angeregt werden. Um das Verhalten am Ende der Einsatzzeit (EOL-Zustand) des Brennelements zu simulieren - also schwächere (relaxierte) Federkräfte - sind beim Versuch der Fig. 6 die Durchmesser der Brennstab-Hüllrohre geringfügig vermindert worden, während der gleiche Abstandhaltertyp mit den gleichen Halteelementen eingesetzt ist. Dabei ist jetzt der Spalt zwischen Brennstab und Hüllrohr zwar kleiner, aber ebenfalls durch einen Draht zur Fixierung der Tablettensäule überbrückt. Es zeigt sich, dass durch den geringeren Außendurchmesser des Hüllrohres und die entsprechend größere Beweglichkeit des Brennstabs in den Halteelementen zumindest die in Fig.5 so auffälligen Amplituden weitgehend verschwunden sind.

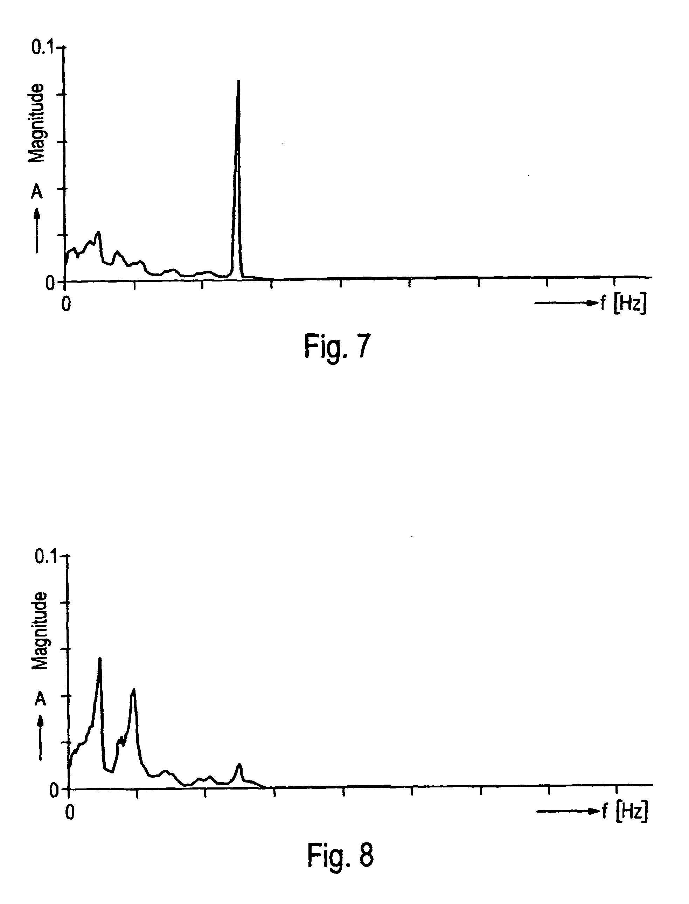

Fig.7 zeigt ein der Fig. 5 entsprechendes Frequenzspektrum bei einem Brennelement, bei dem der Mode (N-2) eine Dämpfung von 0,3 % besitzt, während in Fig.8 nunmehr Brennstäbe eingesetzt sind, die keinen Draht aufweisen, aber im übrigen identisch geblieben sind. Die Dämpfung ist in diesem Fall von etwa 0,3 auf etwa 0,5.% erhöht, wobei überraschender diese geringfügige absolute Erhöhung um nur 0,2 % praktisch zum Verschwinden der in Fig.7 auffälligen Schwingung geführt hat.

Diese Versuche zeigen, dass die Federkraft üblicher Abstandhalter nicht ausreicht, um selbst im BOL-Zustand Schwingungen hoher Amplitude der Frequenz 25 Hertz zu vermeiden, ja dass sogar die hohe Federkraft schädlich ist und das Erlahmen der Federkraft zu geringeren Amplituden führt: Dagegen ist es offensichtlich hinreichend, wenn die Dämpfung erhöht wird, wobei für die besonders auffällige Schwingung von 25 Hertz bereits eine Dämpfung ausreicht, die 0,5 % oder sogar nur 0,4 % beträgt.

Zur Erläuterung der Eigenschwingungen eines Brennelements ist das Brennelement in Figur 9 durch einen Brennstab FR symbolisiert, der mittels Abstandhaltern SP zwischen zwei Führungsrohren angeordnet ist. Im Zustand (a) ist das Brennelement in Ruhe oder die Halteelemente stellen durch eine sehr hohe Federkraft sicher, dass sich die Brennstäbe und Führungsrohre relativ zu den Abstandhaltern nicht bewegen, also weder translatorische noch kippende Bewegungen ausführen. In diesem Fall (starre Halterung) tritt natürlich keine Reibung zwischen Brennstab und Abstandhalter auf. Könnten die Brennstäbe und Führungsrohre jedoch praktisch unabhängig voneinander große Translationen und Kippbewegungen ausführen, wäre der Zustand (b) möglich. Solche Zustände sind jedoch unrealistisch, denn dabei ändern sich die relativen Abstände der Brennstäbe und Führungsrohre stark, während aber die Abstandhalter nur sehr geringen Änderungen der Abstände zulassen. Es können also praktisch nur synchrone Bewegungen angeregt werden. Außerdem führen die Brennstäbe Kippbewegungen (Kippwinkel φ) gegenüber den Brennelementen aus, die ebenfalls nur bei einer gewissen Beweglichkeit der Brennstäbe in den Halteelementen möglich sind.

Bei einer sehr starren Halterung der Brennstäbe in den Abstandhaltern können aber Zustände (c) auftreten, bei denen sowohl die Abstände der Brennstäbe zueinander und zu den Führungsrohren praktisch gleich bleiben als auch verschwindend geringe Kippwinke φ auftreten. Dabei stellt der Zustand (c) eine besonders günstige Schwingung dar, da hier in den Abstandhalterebenen praktisch immer φ = 0 herrscht, also die Brennstäbe nicht gegen die Federkräfte der Halteelemente arbeiten, sondern ihre relative Ruhestellung gegenüber den Abstandhaltern beibehalten. Derartige Schwingungen sind bezüglich des Frettings ungefährlich, bedeuten aber einen Mode hoher Ordnung.

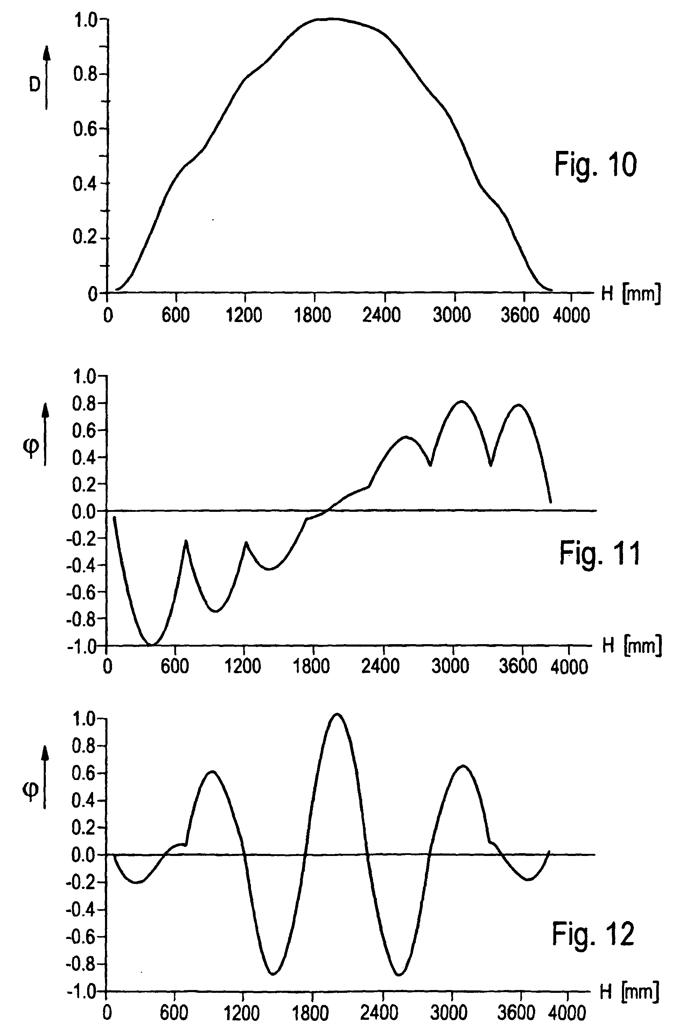

Bei niedrigerer Ordnung liegen die Verhältnisse anders. Fig.10 zeigt Messungen der translatorischen Verschiebung D eines Brennstabs gegenüber seiner Ruhelage bei 'einer Biegeschwingung erster Ordnung als Funktion des Abstands H vom unteren Ende des Brennstabs. Die durch die Abstandhalter hervor gerufene Verzerrung der Sinusfunktion ist hierbei deutlich erkennbar.

Noch deutlicher wird die Abweichung von der Sinusform, wenn man aus Fig.10 den Winkel φ, also den Kippwinkel zwischen den Brennstab (bzw. Führungsrohres) und der Senkrechten auf dem Abstandhalter, ermittelt. Die Abweichung von der Sinusschwingung macht sich dabei durch deutliche Zacken bemerkbar, die jeweils in den Ebenen der Abstandhalter liegen, die sich zwischen dem ersten (untersten) und dem achten (obersten) Abstandhaltern befinden. Hier arbeitet der schwingende Brennstab gegen die Kräfte seiner Halterung. Diese Schwingung ist aber durch die Federkräfte der Halterung verhältnismäßig stark gedämpft; diese Schwingung ist daher im Schwingungsspektrum nur schwach angeregt.

Ermittelt man für die Biegeschwingung 6. Ordnung den entsprechenden Verlauf des Kippwinkels φ, so zeigt Fig.12, dass nunmehr diese Zacken zwar nicht vollständig, aber doch weitgehend verschwunden sind. Brennstab und Brennelement können sich in diesem Mode also nahezu sinusförmig bewegen ohne gegen ihre Halterung zu arbeiten, da die Schwingungsknoten dieser Sinusschwingung praktisch in den Ebenen der Abstandhalter liegen. Entsprechend gering ist die Dämpfung der Schwingung in den Ebenen der Abstandhalter.

Allerdings sind die Brennstäbe in den Abstandhalter nicht punktförmig gehalten, sondern ihre Auflageflächen haben eine axiale Ausdehnung.

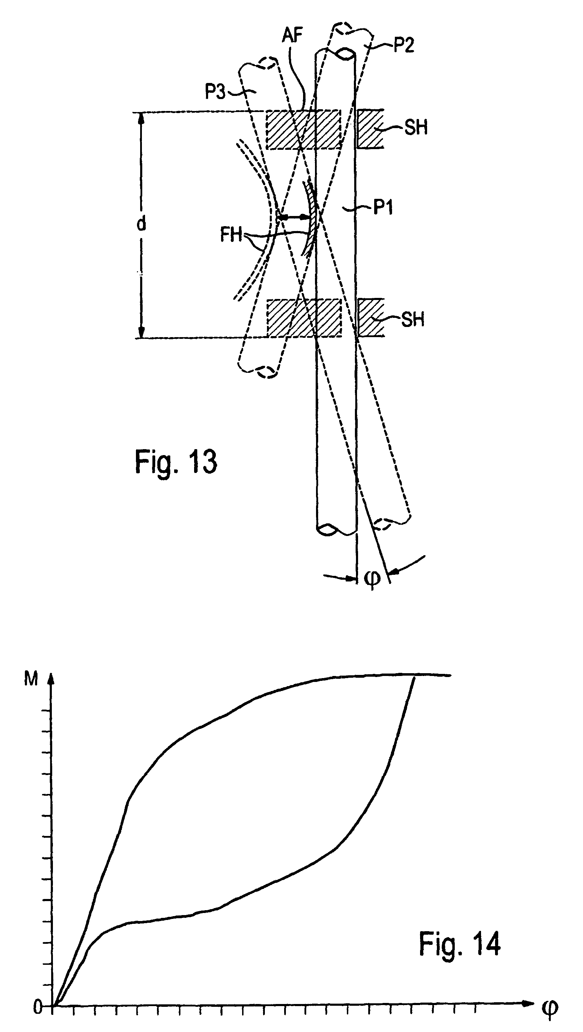

Fig.13 erläutert den Einfluss auf das Fretting, den bei endlicher axialer Ausdehnung die Federkraft der Halteelemente auf eine Schwingung gemäß den Fig.11 und 12 hat. In der Ruhelage des Brennstabs (Position P1) wird der Brennstab von der Federkraft des federnden Halteelements FH derart gegen die starren Halteelemente SH gedrückt, dass der Brennstab senkrecht zum Abstandhalter ausgerichtet ist. Wird nunmehr der Brennstab um den Kippwinkel φ nach der einen Richtung (Position P2) oder anderen Richtung (Position P3) ausgelenkt, so arbeitet das federnde Halteelement FH gegen diese Auslenkung und entnimmt Energie aus der Bewegung des Brennstabs, dämpft also die entsprechenden Schwingungen, wobei diese Dämpfung in den niedrigen Moden relativ groß ist, also einer Anregung der Schwingung entgegenwirkt. Die stärkere Dämpfung der niedrigen Moden führt dazu, dass die von dem turbulenten Kühlwasserstrom übertragene Energie über die Federelemente abgeführt wird, ohne die entsprechende Biegeschwingung zu hohen Amplituden anzuregen.

Bei hohen Moden führt die geringere Kippbewegung dagegen zu einer schwächeren Dämpfung; Anregungen aus dem Kühlmittel werden nur schwach gedämpft. Es können nun die großen Auslenkungen auftreten, die aus Fig. 5 ersichtlich sind.

In Fig.13 sind mit AF die Bereiche angegeben, in denen bei den gezeigten Bewegungen eine Reibung zwischen Brennstab und zwei Auflageflächen stattfindet. Nur an diesen Halteelementen, die beim Stand der Technik starr sind, treten Marken großen Abriebs auf. Dies deckt sich mit den Beobachtungen, dass nämlich nur die starren Halteelemente der Abstandhalter entsprechende Abrieb-Marken auf den Brennstäben der Brennelemente hervorrufen. Aus diesem Grund erscheint es vorteilhaft, möglichst alle Halteelement federnd auszubilden. Außerdem werden solche Abrieb-Marken bei Testversuchen nur mit solchen Frequenzen der Brennstäbe erreicht, die den Ordnungen (N-2) und (N-3) entsprechen.

Misst man das Drehmoment M, das für eine Auslenkung des Brennstabs um den Kippwinkel φ erforderlich ist, als Funktion dieses Winkels, so ergibt sich die in Fig.14 gezeigte Hysteresekurve: selbst bei geringem aber endlichen Winkel (z.B.(φ=0,1°) ist stets ein endliches Drehmoment erforderlich.

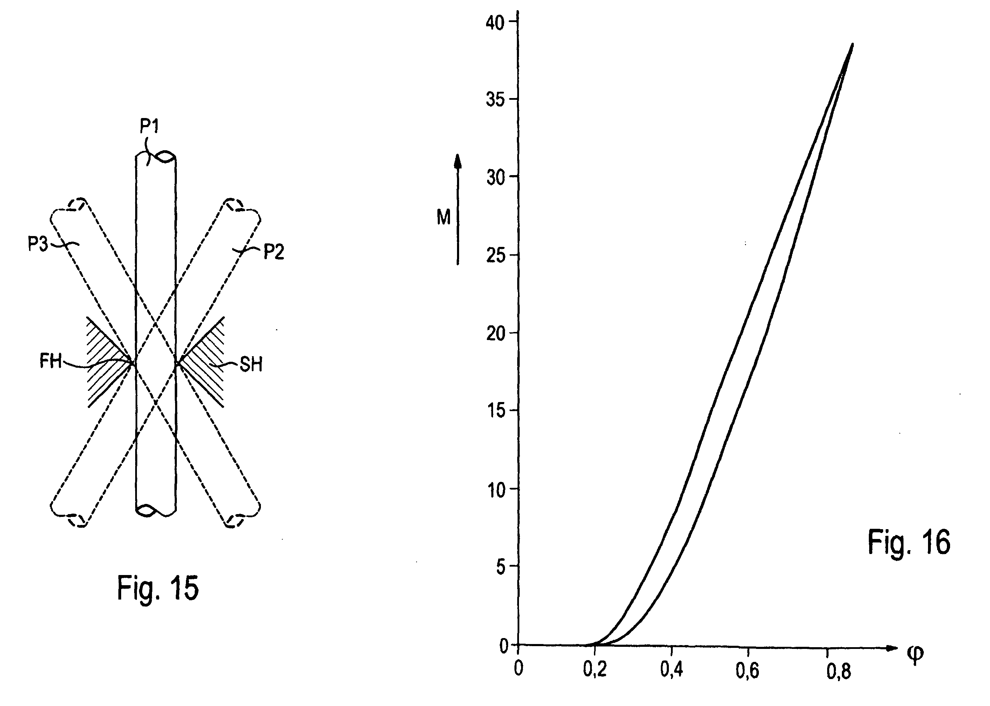

Bei gleicher Federkraft nimmt dieses Drehmoment M jedoch in dem Maße ab, in dem der axiale Abstand d zwischen dem obersten und untersten Punkt der starren Halteelemente SH in Figur 13 verringert wird. Werden dieser Abstand d und die Auflagefläche des federnden Halteelements FH jeweils zu einem Punkt zusammengezogen, wie dies Fig.15 zeigt, so ist selbst für große Kippwinkel φ praktisch kein Drehmoment M mehr erforderlich (Fig.16). Das Verhalten des Brennstabs ist nunmehr praktisch unabhängig von der Federkraft.

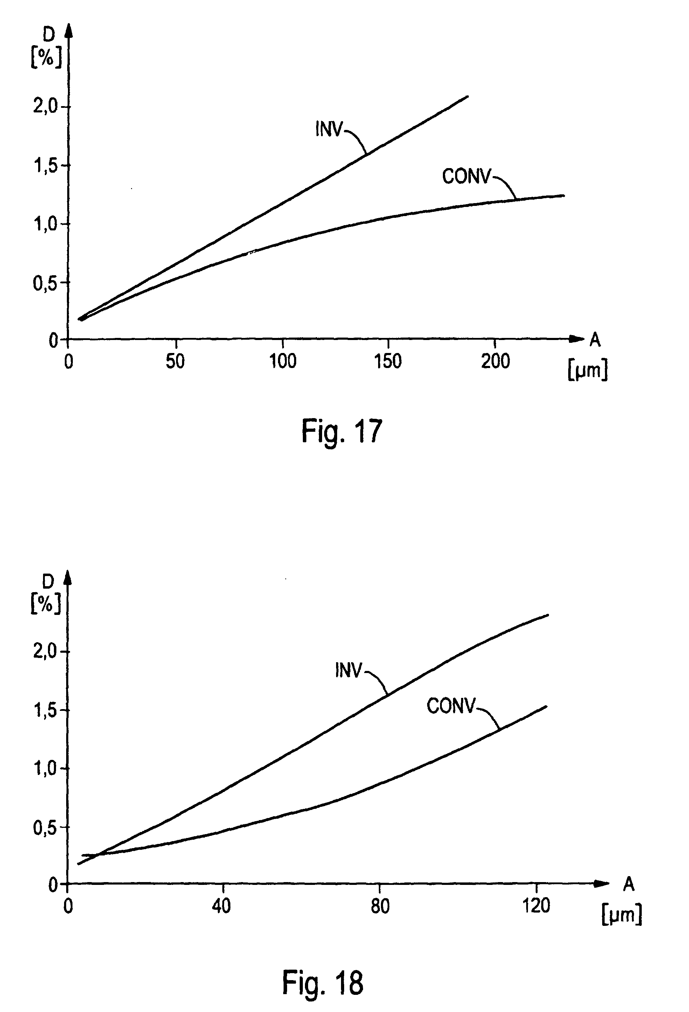

Allerdings finden trotzdem noch Mikrobewegungen statt, die einer entsprechenden Kippschwingung ständig Energie entziehen, wobei die erhöhte Kipp-Beweglichkeit des derart gelagerten Brennstabs zu einer höheren Dämpfung der entsprechenden Moden führt. Daher darf die Ausdehnung der Auflageflächen nicht zu gering sein. In Fig.17 zeigt die Kurve CONV die Dämpfungsfunktion der Auslenkung (Amplitude) des Brennstabs im Mode (N-3) für einen praktisch konventionellen Abstand d=30mm und die Kurve INV die entsprechende Dämpfung für den hier vorgeschlagenen, innovativen Abstand d=3mm. Für den Mode (N-2) ergeben sich die entsprechenden Kurven von Fig.18.

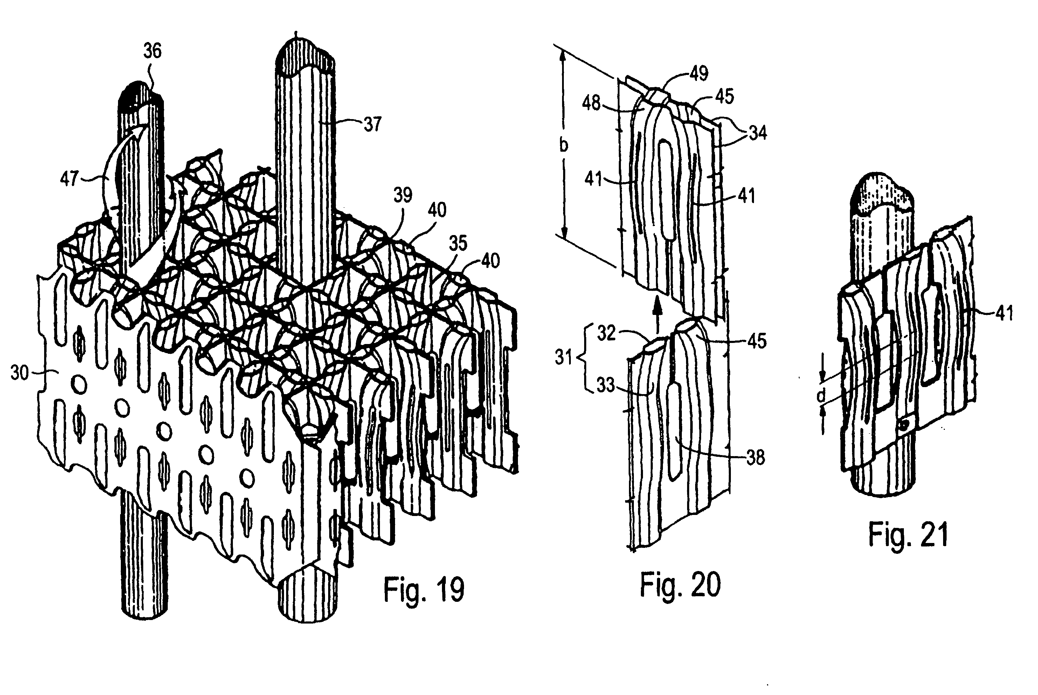

Bei dem Konstruktionsprinzip des bereits erwähnten HTP-Abstandhalters (Figuren 19,20,21) werden - mit Ausnahme des Randstegs 30 - Doppelstege 31 verwendet, die aus zwei flächig aneinander liegenden und miteinander befestigten Wänden 32 und 33 gebildet sind. Diese Doppelstege sind derart ineinander gesteckt, dass sich quadratische Maschen 35 bilden, die zur Aufnahme eines Brennstabes 36 oder Führungsrohres 37 dienen. An der Kreuzung 39 von zwei Doppelstegen 31 und 34 hat jeder dieser Doppelstege (Breite b = 4 bis 4,5 cm) einen ersten Längsschlitz 38. Ferner trägt jede Wand, die eine für die Aufnahme eines Brennstabes bestimmte Masche begrenzt, einen zweiten Längsschlitz 41, wobei beide Schlitze etwa gleich lang sind (Länge 1 zwischen 0,6 und 0,65 mm) und etwa in gleichem Abstand von der Unterkante und der Oberkante der Doppelstege enden. In der Mitte zwischen zwei Kreuzungspunkten ist jede Wand, die eine für einen Brennstab vorgesehene Masche begrenzt, zur Mittelachse der von der Wand begrenzten Masche gebogen, sodass zwischen den Wänden ein von unten bis oben durchgehender Zwischenkanal 40 entsteht. Diese Zwischenkanäle sind an ihrem oberen Ende 45 gekrümmt, wodurch das aus diesen Zwischenkanälen ausströmende Kühlwasser einen Drall 47 um den Brennstab erhält. Ferner sind die Wände 48,49 zu beiden Seiten jedes zweiten Schlitzes 41 derart bogenförmig um eine zum Brennstab senkrecht Achse gebogen, dass der betreffende Brennstab auf der Länge d anliegt, sobald der Brennstab in die Masche eingesetzt ist.

Es zeigt sich, dass für das Fretting-Verhalten die Krümmung am Ende 45 der Zwischenkanäle, nicht erforderlich ist. Vielmehr kann es sogar vorteilhaft sein, vollkommen gerade Zwischenkanäle zu benutzen, wobei an den Oberkanten der Wände Strömungsleitflächen angesetzt sein können, die dem Kühlwasser andere Strömungswege einprägen. Ebenso können auch die als Federung der Halteelemente dienenden Ränder der zweiten Schlitze durch andere federnde Halteelemente ersetzt werden, wobei die zweiten Schlitze ganz entfallen können. Außerdem kann es vorteilhaft sein, die Länge d kleiner als 3 mm einzustellen. Während man bei der Konstruktion der bisherigen HTP-Abstandhalter davon ausgegangen ist, dass d etwa 15 mm beträgt.

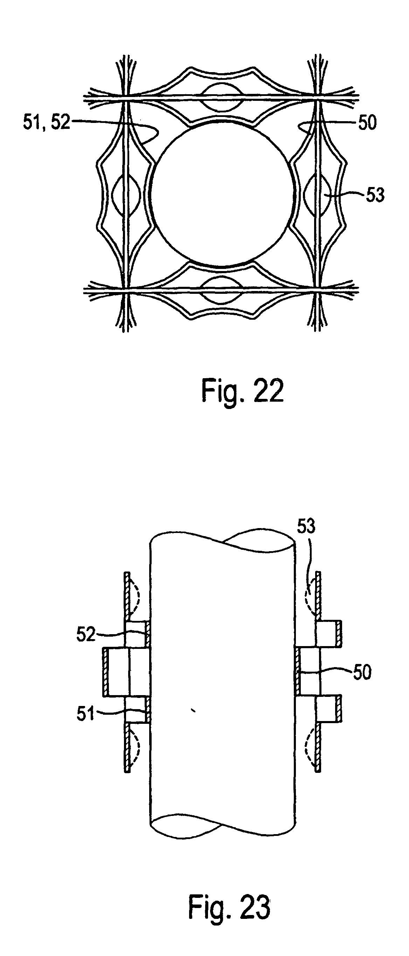

Während das Ausführungsbeispiel von Fig.2 und 3 eine Drei-Punkt-Halterung und das Ausführungsbeispiels von Fig.19-21 eine Acht-Punkt-Halterung darstellt, zeigen Fig.22 und 23 eine Sechs-Punkt-Halterung. Dabei ist vorgesehen, dass vorteilhaft alle Halteelemente federnd ausgebildet werden, wobei in diesem Ausführungsbeispiel jeweils eine Feder 50 an einer Maschenwand den Brennstab an zwei übereinander liegende Federn 51,52 an der gegenüberliegenden Wand drückt. Fig.23 zeigt außerdem noch in gestrichelter Kontur 53 starre Anschläge zur Begrenzung der Amplituden.

Um die durch die Erfindung erreichte Verminderung von Reibungsschäden zu messen, kann man jeweils die Verringerungen der Wanddicke addieren, die durch Reibung an einem der Halteelemente in einer Masche erzeugt werden. Die nachfolgenden Tabellen 1 und 2 vergleichen die durch diese Addition erhaltenen Maßzahlen für einen herkömmlichen Abstandhalter (Versuche 1 bis 4) bei d=30 mm und die entsprechenden Maßzahlen eines Abstandhalters nach der Erfindung (Versuche 5 bis 7) mit d=3 mm. Die Brennelemente wurden dabei elektromagnetisch in den Modes angeregt, die auch im Reaktor beobachtet wurden. Allerdings, wurden die Amplituden auf einen konstanten Wert eingestellt, der für den Reaktorbetrieb untypisch hoch ist; auf diese Weise konnten nämlich in endlicher Zeit Vergleichswerte erhalten werden.

Die dabei auftretenden Unterschiede sind besonders bemerkenswert, weil sie hauptsächlich auf die unterschiedliche Dämpfung des Modes (N-2) zurückgehen, wobei diese Dämpfung jedoch in beiden Fällen nur sehr gering ist. Die erhöhte Dämpfung geht allerdings ihrerseits darauf zurück, dass die Beweglichkeit der Brennstäbe, die eigentlich als Ursache des deutlich geringeren Frettings in den Versuchen 5 bis 7 anzusehen ist, deutlich erhöht wird.

| Versuch-Nr. | Versuchsdauer 25 h | Versuchsdauer 50 h | Versuchsdauer 75 h | Versuchsdauer 100 h |
|---|---|---|---|---|
| 1 | 60 | 120 | | 220 |
| 2 | 80 | 150 | 210 | 250 |
| 3 | 100 | 130 | 190 | 250 |
| 4 | 50 | 80 | 150 | 230 |

Tabelle 1

| Versuch-Nr. | Versuchsdauer 25 h | Versuchsdauer 50 h | Versuchsdauer 75 h | Versuchsdauer 100 h |
|---|---|---|---|---|
| 5 | 10 | 10 | 10 | 10 |
| 6 | 0 | 0 | 0 | 0 |
| 7 | 0 | 10 | 10 | 20 |

Bezugszeichenliste

| | |
|---|---|
| 1,2 | Stege |
| 3 | Feder (Halteelement) |
| 4,4a, 4b | Noppe (Halteelement) |
| 5 | Brennstab |
| 30 | Außensteg |
| 31,34 | Doppelsteg |
| 32,33 | Wände |
| 35 | Masche |
| 36 | Brennstab |
| 37 | Führungsrohr |
| 38 | Längsschlitz |
| 39 | Kreuzung |

| | |
|---|---|
| 40 | Zwischenkanal |
| 41 | Längsschlitz |
| 45 | oberes Ende des Zwischenkanals |
| 47 | Drall |
| 48, 49 | Wände |

| | |
|---|---|
| F | Fuß |
| K | Kopf |
| G | Steuerstab-Führungsrohr |
| SP | Abstandhalter |
| FR | Brennstab |
| $d, d_0$ | axialer Abstand |

| | |
|---|---|
| h1,h2 | höchster/niedrigster Auflagepunkt |
| v | Strömungsgeschwindigkeit |
| A | Amplitude |
| D | Verschiebung gegenüber Ruhezustand |
| H | Abstand vom unteren Ende |
| FH | federndes Halteelement |
| AF | Flächen mit Reibung |


**Patentansprüche**

1. Abstandhalter für mehrere jeweils eine Masche des Abstandhalters durchsetzende Brennstäbe eines Brennelements für einen von einem Leichtwasserstrom gekühlten Kernreaktor, mit jeweils mehreren Halteelementen in jeder dieser Maschen, an denen der Brennstab derart seitlich abgestützt ist, dass die auf den Abstandhalter bezogene relative Beweglichkeit des Brennstabs begrenzt und derart gedämpft ist, dass der Brennstab in der Ebene des Abstandhalters vom Kühlmittelstrom überwiegend in Kippschwingungen versetzt wird,
   **dadurch gekennzeichnet,**
   **dass** die Haltelemente jeweils auf einen Brennstab bei einem Kippwinkel φ =0,1°, dessen Drehachse senkrecht zum Brennstab in der Ebene des Abstandhalters verläuft, ein Drehmoment M ≤ 10 N · mm ausüben.

2. Abstandhalter nach Anspruch 1,
   **dadurch gekennzeichnet,**
   **dass** in zumindest einer dieser Maschen die Halteelemente mit mehreren langgestreckten Auflageflächen, deren Längsausdehnung mindestens 1 mm beträgt, am Brennstab anliegen und bereits im unbestrahlten Zustand des Abstandhalters der höchste Auflagepunkt des Brennstabs in dieser Masche höchstens 10 mm über dem niedrigsten Auflagepunkt des Brennstabs in der gleichen Masche liegt.

3. Abstandhalter nach Anspruch 1 oder 2,
   **dadurch gekennzeichnet,**
   **dass** der höchste Auflagepunkt höchstens 5 mm, vorzugsweise höchstens 3 mm über dem niedrigsten Auflagepunkt des Brennstabs in der gleichen Masche liegt.

4. Abstandhalter nach Anspruch 1, 2 oder 3,
   **dadurch gekennzeichnet,**
   **dass** zumindest in den inneren Maschen derartige Halteelmenete vorgesehen sind.

5. Abstandhalter nach einem der Ansprüche 1 bis 4,
   **dadurch gekennzeichnet,**
   **dass** in allen Maschen derartige Halteelemente vorgesehen sind.

6. Abstandhalter nach einem der Ansprüche 1 bis 5,
   **dadurch gekennzeichnet,**
   **dass** in jeder solche Auflageflächen enthaltenden Masche jeweils in einer Ebene oberhalb und unterhalb der Auflageflächen Anschläge vorgesehen sind, die die seitliche Auslenkung des Brennstabes gegenüber seinem Ruhezustand auf 0,1 bis 0,5 mm, vorteilhaft höchstens 0,3 mm beschränken.

**7.** Abstandhalter nach Anspruch 6,
**dadurch gekennzeichnet,**
**dass** über und unter jeder Auflagefläche ein solcher Anschlag vorgesehen ist.

**8.** Abstandhalter nach einem der Ansprüche 1 bis 7,
**dadurch gekennzeichnet,**
**dass** jeder dieser Brennstäbe an weniger als acht langgestreckten Auflageflächen an den Halteelementen der Masche abgestützt ist

**9.** Abstandhalter nach einem der Ansprüche 1 bis 8,
**dadurch gekennzeichnet,**
**dass** die Auflageflächen parallel zum Brennstab ausgerichtet sind.

**10.** Abstandhalter nach einem der Ansprüche 1 bis 9,
**dadurch gekennzeichnet,**
**dass** die Auflageflächen oder Paare von derartigen Auflageflächen äquidistant über den Umfang des Brennstabes verteilt sind.

**11.** Brennelement für einen von einem Leichtwasserstrom gekühlten Kernreaktor,
**dadurch gekennzeichnet,**
**dass** wenigstens ein Abstandhalter nach einem der vorhergehenden Ansprüche vorgesehen ist.

**12.** Brennelement nach Anspruch 11,
**dadurch gekennzeichnet,**
**dass** zumindest als unterster Abstandhalter ein Abstandhalter nach einem der vorhergehenden Ansprüche vorgesehen ist.


## Claims

**1.** Spacer for a plurality of fuel rods, which in each case pass through a mesh opening of the spacer, of a fuel element for a nuclear reactor which is cooled by a stream of light water, having in each case a plurality of holding elements in each of these mesh openings, on which the fuel rod is laterally supported in such a manner that the relative mobility of the fuel rod with respect to the spacer is limited and damped in such a manner that the stream of coolant imparts predominantly tilting oscillations to the fuel rod in the plane of the spacer, **characterized in that** the holding elements each exert a torque $M \leq 10 \text{ N} \cdot \text{mm}$ on a fuel rod at a tilting angle $\phi = 0.1°$, the axis of rotation of which runs perpendicular to the fuel rod in the plane of the spacer.

**2.** Spacer according to Claim 1, **characterized in that** in at least one of these mesh openings, the holding elements bear against the fuel rod by means of a plurality of elongate bearing surfaces, the longitudinal extent of which is at least 1 mm, and, even in the unirradiated state of the spacer, the highest bearing point of the fuel rod in this mesh opening lies at most 10 mm above the lowest bearing point of the fuel rod in the same mesh opening.

**3.** Spacer according to Claim 1 or 2, **characterized in that** the highest bearing point lies at most 5 mm, preferably at most 3 mm, above the lowest bearing point of the fuel rod in the same mesh opening.

**4.** Spacer according to Claim 1, 2 or 3 **characterized in that** holding elements of this type are provided at least in the inner mesh openings.

**5.** Spacer according to one of Claims 1 to 4, **characterized in that** holding elements of this type are provided in all the mesh openings.

**6.** Spacer according to one of Claims 1 to 5, **characterized in that**, in each mesh opening which includes bearing surfaces of this type, stops which limit the lateral deviation of the fuel rod with respect to its at-rest position to 0.1 to 0.5 mm, advantageously at most 0.3 mm, are provided in both a plane above the bearing surfaces and a plane below the bearing surfaces.

**7.** Spacer according to Claim 6, **characterized in that** a stop of this type is provided above and below each bearing surface.

8. Spacer according to one of Claims 1 to 7, **characterized in that** each of these fuel rods is supported against the holding elements of the mesh opening at fewer than eight elongate bearing surfaces.

9. Spacer according to one of Claims 1 to 8, **characterized in that** the bearing surfaces are oriented parallel with respect to the fuel rod.

10. Spacer according to one of Claims 1 to 9, **characterized in that** the bearing surfaces or pairs of bearing surfaces of this type are distributed equidistantly over the periphery of the fuel rod.

11. Fuel element for a nuclear reactor which is cooled by a light water stream, **characterized in that** at least one spacer according to one of the preceding claims is provided.

12. Fuel element according to Claim 11, **characterized in that** a spacer according to one of the preceding claims is provided at least as the lowermost spacer.


**Revendications**

1. Grille d'espacement pour plusieurs crayons combustibles, passant respectivement dans les mailles de la grille, d'un assemblage combustible pour un réacteur nucléaire à refroidissement par un courant d'eau légère, comprenant respectivement plusieurs éléments de maintien dans chacune de ses mailles, sur lesquels le crayon combustible s'appuie latéralement de façon à ce que la mobilité du crayon combustible par rapport à la grille soit limitée et soit amortie de façon à ce que le crayon combustible soit décalé dans le plan de la grille par le courant de fluide de refroidissement d'une manière prépondérante suivant des oscillations de basculement,
   **caractérisée,**
   **en ce que** les éléments de maintien appliquent respectivement sur un crayon combustible pour un angle de basculement $\varphi = 0{,}1°$, dont l'axe de rotation s'étend perpendiculairement au crayon combustible dans le plan de la grille, un couple de rotation $M \leq 10$ N.mm.

2. Grille d'espacement suivant la revendication 1,
   **caractérisée**
   **en ce que**, dans au moins l'une de ses mailles, les éléments de maintien s'appliquent au crayon combustible par plusieurs surfaces de contact, qui s'étendent en longueur et dont l'étendue longitudinale est d'au moins 1 mm et, déjà à l'état non irradié de la grille, le point de contact le plus haut du crayon combustible dans cette maille se trouve au plus à 10 mm au-dessus du point de contact le plus bas du crayon combustible dans la même maille.

3. Grille d'espacement suivant la revendication 1 ou 2
   **caractérisée en ce que** le point de contact le plus haut se trouve au plus à 5 mm et, de préférence, au plus à 3 mm au-dessus du point de contact le plus bas du crayon combustible dans la même maille.

4. Grille d'espacement suivant la revendication 1, 2, ou 3,
   **caractérisée en ce qu'**il est prévu des éléments de maintien de ce genre au moins dans les mailles intérieures.

5. Grille d'espacement suivant l'une des revendications 1 à 4,
   **caractérisée en ce qu'**il est prévu des éléments de maintien de ce genre dans toutes les mailles.

6. Grille d'espacement suivant l'une des revendications 1 à 5,
   **caractérisée en ce qu'**il est prévu dans chaque maille contenant des surfaces de contact de ce genre, respectivement dans un plan au-dessus et en dessous des surfaces de contact, des butées qui limitent la déviation latérale du crayon combustible par rapport à son état de repos à 0,1 à 0,5 mm et, de préférence, à 0,3 mm au plus.

7. Grille d'espacement suivant la revendication 6,
   **caractérisée en ce qu'**il est prévu, au-dessus et en dessous de chaque surface de contact, une butée de ce genre.

EP 1 354 323 B1

8. Grille d'espacement suivant l'une des revendications 1 à 7, **caractérisée en ce que** chacun de ces crayons combustibles s'appuie par moins de huit surfaces de contact s'étendant en longueur sur les éléments de maintien de la maille.

9. Grille d'espacement suivant l'une des revendications 1 à 8, **caractérisée en ce que** les surfaces de contact sont parallèles au crayon combustible.

10. Grille d'espacement suivant l'une des revendications 1 à 9, **caractérisée en ce que** les surfaces de contact ou des paires de surfaces de contact de ce genre sont réparties de manière équidistante sur le pourtour du crayon combustible.

11. Assemblage combustible pour un réacteur nucléaire à refroidissement par un courant d'eau légère, **caractérisé en ce qu'**il est prévu au moins une grille d'espacement suivant l'une des revendications précédentes.

12. Assemblage combustible suivant la revendication 11, **caractérisé en ce qu'**il est prévu, au moins comme grille d'espacement la plus basse, une grille d'espacement suivant l'une des revendications précédentes.

K

G

SP

FR

SP

SP

F

Fig. 1

Fig. 2

Fig. 3

Fig. 4

Fig. 5

Fig. 6

Fig. 7

Fig. 8

Fig. 9

EP 1 354 323 B1

Fig. 10

Fig. 11

Fig. 12

EP 1 354 323 B1

Fig. 13

Fig. 14

22

P1

P3

P2

FH

SH

Fig. 15

M

40

35

30

25

20

15

10

5

0

0    0,2    0,4    0,6    0,8    φ

Fig. 16

EP 1 354 323 B1

Fig. 17

Fig. 18

Fig. 19

Fig. 20

Fig. 21

Fig. 22

Fig. 23